# EUROPEAN PATENT APPLICATION

(11) **EP 3 604 008 A1**
(43) Date of publication of application: **05.02.2020**
(21) Application number: 19188550.8
(22) Date of filing: 26.07.2019
(51) Int. Cl.: B60J 7/06

(54) **ROLLER COVER FOR TRAYBACK VEHICLE**

(30) Priority: 30.07.2018 AU 2018208776
(71) Applicant: DAIP PTY. LTD., Noble Park North, VIC 3174 (AU)
(72) Inventor: AIMAQ, Masood, Noble Park North, Victoria 3174 (AU); DOST, Omer, Noble Park North, Victoria 3174 (AU)
(74) Representative: Margotti, Herwig Franz

(57) **Abstract**

An automated roller cover (100) for a tray back vehicle is disclosed. The automated roller cover comprises a roller cover (140) comprising a curtain (160), a control unit (201) operatively connected to the roller cover (140) to actuate the rolling and at least one tailgate tilt unit (180) operatively connected to the control unit (201) providing tilt data for the tailgate (320) as an input to the control unit (201). The at least one tail gate tilt unit (180) may comprises a sensor (182, 280) such as an accelerometer. The control unit (201) compares the tray back angle to the tailgate angle to determine if the tailgate is opening, opened, closing or closed.

## Description

### FIELD OF THE INVENTION

The present invention relates to an automated roller cover for a tray back vehicle, a method of automatically controlling a roller cover for a tray back vehicle; a method of manufacturing an automated roller cover for a tray back vehicle; and a method of installing an automated cover for a tray back vehicle. More particularly, the present invention relates to an automated roller cover and those methods comprising a control unit.

### BACKGROUND TO THE INVENTION

The tray of tray back vehicles such as, utility vehicles and pickup trucks, provides convenient space for transport and storage. While the tray may be configured as a flatbed, commonly the flat tray is bordered by the cabin, two sides and a rear tailgate which usually pivots up and down at the end of the tray back.

A drawback is the open space in the tray back is a security concern. A variety of types of cover, known as tonneau covers, including hard and soft covers are used. One type of hard cover is a roller cover which can be rolled and unrolled, like a roller blind, to access the tray back. One type of roller cover is pulled with a rope attached to the end of the roller cover. Some roller covers clip into place whilst are other can be locked with the tailgate.

This highlights another drawback, which is that many tray back vehicles do not offer a lock for the tailgate.

It is desired to have improved tray back roller covers.

The reference to any prior art in this specification is not, and should not be taken as, an acknowledgement or any form of suggestion that the prior art forms part of the common general knowledge.

### SUMMARY OF THE INVENTION

Generally, embodiments of the present invention relate to an automated roller cover for a tray back vehicle; a method of automatically controlling a roller cover for a tray back vehicle; and a method of manufacturing an automated roller cover for a tray back vehicle; and a method of installing an automated roller cover for a tray back vehicle.

In a broad form the invention relates to an automated roller cover for a tray back vehicle, a method of manufacturing an automated roller cover for a tray back vehicle and a method of installing an automated roller cover for a tray back vehicle which utilises a control unit to enable secure and/or remote access.

In one advantageous from, the control unit is operatively connected to one or more tilt unit to safely open and/or close the roller cover.

In a first form, although it need not be the only or indeed the broadest form, the invention resides in an automated roller cover for a tray back vehicle, the automated roller cover comprising:
a roller cover comprising a curtain that rolls along at least a part of a length of said tray back between a retracted position which allows access to the tray back and an extended position which closes access to the tray back;
a control unit operatively connected to the roller cover to actuate the rolling; and
at least one tailgate tilt unit operatively connected to the control unit providing tilt data for the tailgate as an input to the control unit.

In a second form, the invention resides in a method for automatically controlling a roller cover of a tray back vehicle, the method comprising:
operating a control unit operatively connected to the roller cover to actuate the rolling, wherein the roller cover comprises a curtain that rolls along at least a part of a length of said tray back between a retracted position, which allows access to the tray back, and an extended position, which closes access to the tray back; and
wherein, the control unit is operatively connected to at least one tailgate tilt unit, the at least one tailgate tilt unit providing tilt data as an input to the control unit.

In a third form, the invention resides in a method for manufacturing an automated roller cover for a tray back vehicle, the method comprising:
producing a roller cover comprising a curtain that rolls along at least a part of a length of said tray back between a retracted position which allows access to the tray back and an extended position which closes access to the tray back; and
making a control unit for operative connection to the roller cover to actuate the rolling; and
providing at least one tailgate tilt unit operatively connected to the control unit providing tilt data for the tailgate as an input to the control unit.

In a fourth form, the invention resides in a method of installing an automated roller cover for a tray back vehicle, the method comprising:
operatively connecting a control unit so the control unit actuates a roller cover, the roller cover comprising a curtain that rolls along at least a part of a length of said tray back between a retracted position which allows access to the tray back and an extended position which closes access to the tray back; and
operatively connecting at least one tailgate tilt unit to provide tilt data for the tailgate as an input to the control unit.

In a fifth form, the invention resides in a kit for installing an automated roller cover for a tray back vehicle, the kit comprising:
a control unit for operative connection to said automated roller cover so the control unit actuates said roller cover, the roller cover comprising a curtain that rolls along at least a part of a length of said tray back between a retracted position which allows access to the tray back and an extended position which closes access to the tray back; and
at least one tailgate tilt unit for operative connection to the control unit to provide tilt data for the tailgate as an input to the control unit.

The kit of the fifth form may further comprise the roller cover.

The method of installing of the fourth form or kit for installing of the fifth form may comprise a method or kit of retrofitting or retro-installation.

In one embodiment of any one of the above forms, the at least one tail gate tilt unit may comprise sensor. The sensor may comprise a one, two, three or four axis accelerometer or a gravity sensor. In on embodiment the tilt axis accelerometer is a three axis accelerometer.

In one embodiment of any one of the above forms, the control unit may compare the control unit or tray back angle to the tailgate angle to determine if the tailgate is opening, opened, closing or closed.

In another embodiment of any one of the above forms, when an open tailgate is detected, closing of the roller cover may be limited to prevent damage. The opening may be limited to 50; 40; 30; 20 or 10 mm.

In yet another embodiment of any one of the above forms, when the tailgate is detected to be open or opening, the roller cover may be opened slightly. The slight opening may also comprise 50; 40; 30; 20 or 10 mm.

In still yet another embodiment of any one of the above forms, after the tailgate is detected to be closed, the control unit may close the roller cover. A predetermined time may be allowed to pass between the detection of the tailgate to be closed and the closing of the roller cover. The predetermined time may be 5; 10; 15; 30; 45; 60; 90; 120; 180; 240; or 300 seconds.

In another embodiment of any one of the above forms, when the control unit detects the tailgate has been opened, the roller cover may be opened.

In yet another embodiment of any one of the above forms, when the control unit detects the tailgate has been closed, the roller cover may be closed.

In another embodiment of any one of the above forms, the control unit comprises a component of a computer central processing unit (CPU) that directs the operation of a processor or a CPU. The control unit may further comprise an accelerometer. The control unit accelerometer may comprise a three axis accelerometer.

In still another embodiment of any one of the above forms, a tray back sensor is comprised. The tray back sensor may comprise the control unit accelerometer or an accelerometer located elsewhere on the tray back. The tray back sensor also provides tilt information to the control unit. The tray back sensor tilt information may be used to determine if the tray back is on a slope or if the tail gate is open.

According to any one of the above forms, one or both of a relative position of the one or more tail gate tilt unit relative to the body of the vehicle and a relative position of the control unit and/or tray back sensor may be configured during installation. The one or more tail gate tilt unit accelerometer may provide the one or more of the tailgate position and angle to the control unit. The one or more control unit accelerometer and/or tray back sensor may provide one or more of the roller cover position and angle to the control unit.

In yet another embodiment of any one of the above forms, the control unit is comprised in a housing. The housing may comprise a user interface. The user interface may comprise one or more button. The one or more button may be used to open and close the roller cover. The one or more button and/or the control unit may be disposed on a side rail. The user interface may comprise one or more LED (Light Emitting Diode) indictor. When the control unit receives an open command from the housing user interface, the control unit may check if the central locking is locked or unlocked and open the roller cover if unlocked. The control unit may not open in response to an open command from the housing user interface if the central locking is locked. The housing may be positioned on a side rail of the roller cover.

The control unit may further comprise a proximity switch operatively connected to a key fob of the vehicle's central locking system. The proximity switch may activate the one or more button of the user interface. The proximity switch may be used for one or more of configuring a receiver; synching remote controls; setting roller cover speed; and other features.

In still another embodiment of any one of the above forms, the control unit is operatively connected to the vehicle's central locking system. The connection to the central locking system may comprise a two-wire interface. The roller cover may be opened by pressing an open or unlock button of a paired key-fob remote control connected to the central locking system. The roller cover may be closed by pressing a close or lock button of a paired key-fob remote control connected to the central locking system.

The control unit may be operatively connected to a mobile phone. The operative connection to the mobile phone may comprise a Bluetooth connection or a mobile telephone network connection. When the control unit is operatively connected to a mobile phone, an interface displayed on the mobile phone may be used to operate the control unit. The interface may comprise part of an App or Application software. The Bluetooth connection may comprise a low energy Bluetooth connection. When the control unit receives an open command from the mobile phone, the control unit may check if the central locking is locked or unlocked and open if unlocked. The control unit may not open in response to an open command from the mobile phone if the central locking is locked. When the control unit receives a close command from the mobile phone, the roller cover may close.

In another embodiment of any one of the above forms, the roller cover further comprises one or more motor for driving the rolling. The motor may be manually disengaged from the roller cover to allow manual opening and closing of the roller cover. The disengagement may be by a lever.

In yet another embodiment of any one of the above forms, the roller cover further comprises one or more light for illuminating the tray area. The one or more light may automatically illuminate when opening and automatically shut off when closing. The one or more light may be illuminated and or shut off by the user interface. The one or more light may comprise one or more LED (Light Emitting Diode). The one or more light may comprise a light bar running along a part of or the length of the tray.

In still another embodiment of any one of the above forms, the automatic roller cover comprises interlocking aluminium and rubber extrusions. Neighbouring aluminium extrusions may interlock. The interlocked neighbouring aluminium extrusions may sandwich a rubber extrusion. The extrusions may slide along and between the two opposed side rails. Each of the extrusions may be held in a respective curtain retainer glide. A plurality of curtain retainer glides may be disposed along a pair of slides. The pair of slides may be on opposing sides of the tray back and extend in parallel. Each slide may be disposed on a respective side rail. Each of the plurality of retainer glides may comprise a Teflon® strip. The side rail slides may fit into a canister convolute. Both rails and bottom of the extrusions may be designed to have a circular radius to better glide on the Teflon® strip.

In another embodiment of any one of the above forms, the control unit further comprises one or more of: input over current protection; reverse-bias protection; Direct Current (DC) motor direction control; motor speed control; one or more remote control; Bluetooth connectivity; onboard system diagnostics; onboard system configuration memory; onboard black box unit usage memory; physical interface for connection to the tailgate tilt unit; and automotive grade weatherproof connections.

The one or more remote control may comprise a button remote control. The button remote control may comprise a Keeloq Code-Hopping 433 MHz four button remote control.

The physical interface may comprise a LIN bus. The LIN bus may also connect the control unit and the one or more tailgate tilt unit.

In yet another embodiment of any one of the above forms, one or more of the control unit, one or more tail gate tilt unit, motor and light are connected to a battery. The battery may comprise the vehicle's battery.

In still another embodiment of any one of the above forms, the roller cover is ladder rack compatible.

Further aspects and/or features of the present invention will become apparent from the following detailed description.

### BRIEF DESCRIPTION OF THE DRAWINGS

In order that the invention may be readily understood and put into practical effect, reference will now be made to embodiments of the present invention with reference to the accompanying drawings, wherein like reference numbers refer to identical elements. The drawings are provided by way of example only.
Figure 1 is a schematic diagram showing one embodiment of a components actuating the roller cover according to the invention;
Figures 2A and 2B show one embodiment of a control unit according to the invention.
Figures 3A; 3B; 3C; 3D; 3E and 3F show a perspective view; a front view; a first side view; an opposing side view; a top view and a rear view, respectively, of a roller cover according to the invention.
Figure 3F shows a close up view of motor, being a zoomed in region of FIG. 3D.
Figure 4A shows a side view of one embodiment of a roller cover according to the invention.
Figure 4B shows a zoomed in region of "C" in Figure 4A.
Figure 5A shows a perspective view of a slide according to the invention.
Figure 5B shows a zoomed in region of Figure 5A.
Figure 6 shows an exploded view of one embodiment of a control unit according to the invention.

Skilled addressees will appreciate that elements in the drawings are illustrated for simplicity and clarity and have not necessarily been drawn to scale. For example, the relative dimensions of some elements in the drawings may be distorted to help improve understanding of embodiments of the present invention.

### DETAILED DESCRIPTION OF THE INVENTION

Embodiments of the present invention relate to an automated roller cover for a tray back vehicle. Also provided are methods of automatically controlling a roller cover for a tray back vehicle; a method of manufacturing an automated roller cover for a tray back vehicle; and a method of installing an automated roller cover for a tray back vehicle.

The present invention is at least partly predicated on the inventor's unexpected discovery that a control unit for an automated roller cover for a tray back vehicle can be operatively connected to one or more tilt unit to provide tilt data for the tray back to safely open and/or close the roller cover.

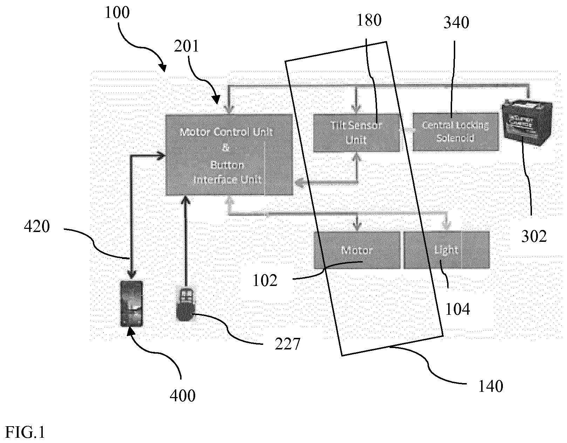

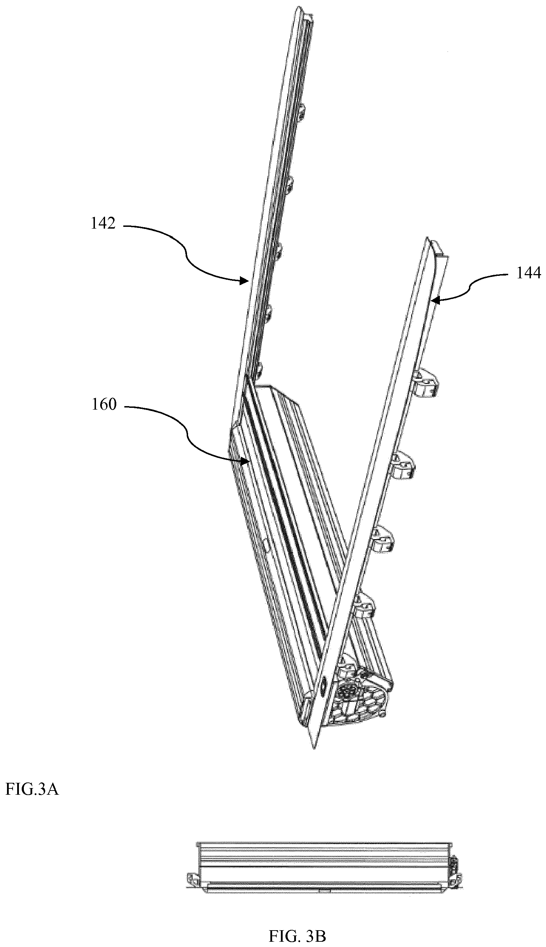

FIG. 1 is a schematic diagram of one embodiment of some of the components of the automated roller cover 100 and some of their interconnectivity according to the invention. FIG. 1 shows a control unit 201 operatively connected to the roller cover 140 (see FIG. 3A) to actuate the rolling and at least one tailgate tilt unit 180 operatively connected to the control unit 201 to provide tilt data for the tailgate 320 (not shown) as an input to the control unit 201.

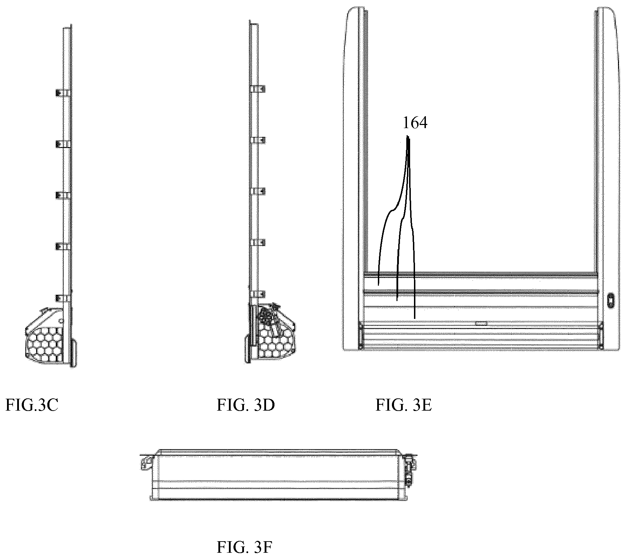

Various views of one embodiment of a roller cover 140 according to the invention are shown in FIGS. 3A, 3B, 3C, 3D, 3E and 3F (FIGS. 3A to 3F; or FIG. 3). Roller cover 140 comprises a curtain 160 that rolls along at least a part of a length of said tray back 310 (not shown) of vehicle 300 (not shown) between a retracted position (see FIG. 3A) which allows access to the tray back 310 and an extended position (not shown) which closes access to the tray back 310.

In the embodiment shown, both the at least one tilt unit 180 and the control unit 201 comprise a three axis accelerometer 182 (not shown), 280 to provide the appropriate tilt data on the position of the tailgate 320 and the roller cover 140, respectively. From the teaching herein a skilled person is readily able to select other suitable accelerometers such as, a one, two, or four axis accelerometer.

As will be appreciated by the skilled person, the provision of a tray back sensor (not shown) may be integrated within the control unit 201 as accelerometer 280 or as a separate component with its own distinct location on tray back 310. The tray back sensor. In this manner, the tray back sensor also provides tilt information to the control unit 201. The tilt information may be used to determine if the tray back 310 is on a slope or if the tail gate 320 is open.

This arrangement allows one or both of a relative position of the one or more tilt unit 180, and thereby the tailgate 320 to which it is fitted, relative to the body of the vehicle 300 and a relative position of the control unit 201 and/or tray back sensor to be configured during installation. The one or more tilt unit accelerometer 182 may provide one or more of the tailgate 320 position and angle to the control unit 201. The one or more control unit accelerometer 280 and/or tail gate sensor may provide one or more of the roller cover 140 position and/or tray back 310 angle to control unit 201. The control unit 201 may compare the tray back 310 and/or control unit 201 angle to the tailgate 230 angle to determine if the tailgate 320 is opening, opened, closing or closed and/or if the tray back 310, and thereby vehicle 300, are on a slope.

Advantageously, when the control unit 201 or at least one tail gate tilt unit 180 detects an open tailgate 320, closing of the roller cover 140 may be limited to prevent damage to the motor 102, tray back 310 or tailgate 320. The opening may be limited to 50; 40; 30; 20 or 10 mm.

Additionally, when the tailgate 320 is detected to be open or opening, the roller cover 140 may be opened slightly to prevent damage. The slight opening may also comprise 50; 40; 30; 20 or 10 mm.

This slight opening is quite advantageous because the roller cover 140 is locked by motor 102. The slight opening may help prevent any force passing through to motor 102 when the tailgate is closed.

Another advantage of the present invention is that when the at least one tilt unit 180 detects the tailgate 320 to be closed, the control unit 201 may close the roller cover 140. A predetermined time may be allowed to pass between the detection of the tailgate 320 to be closed and the closing of the roller cover 140. The predetermined time may be 5; 10; 15; 30; 45; 60; 90; 120; 180; 240; or 300 seconds.

Advantageously, when control unit 201 detects tailgate 320 has been opened, the roller cover 140 may be automatically opened. Also, when control unit 201 detects tailgate 320 has been closed, the roller cover 140 may be automatically closed.

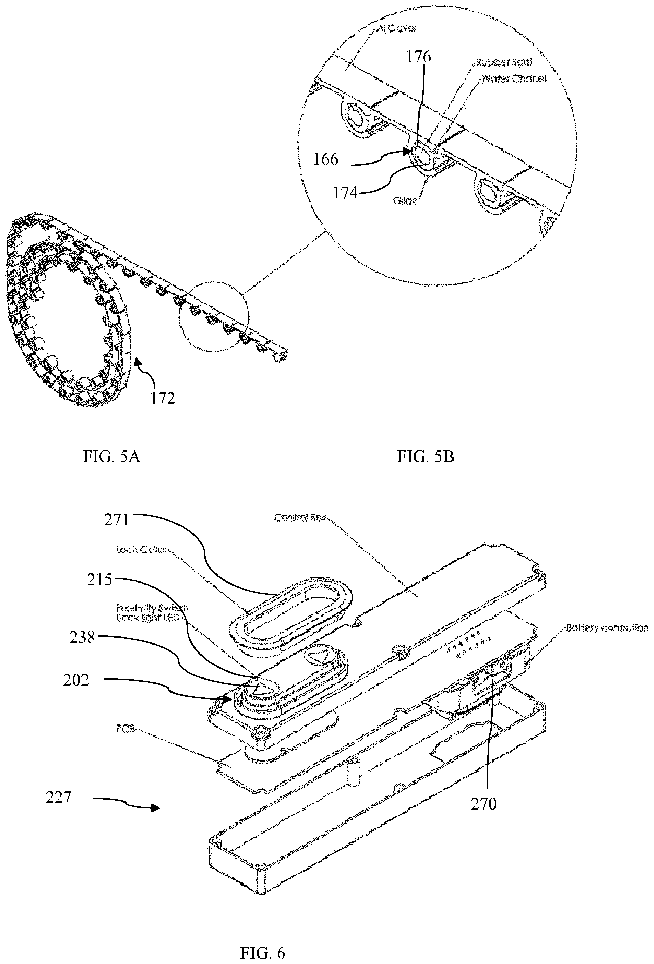

As will be further described below, control unit 201 comprises a component of a computer central processing unit (CPU) that directs the operation of a processor or a CPU. In the embodiment shown in FIGS. 1 and 6, control unit 201 was custom designed by Fabtronics for the invention (Fabtronics: 39-41 Canterbury Rd, Braeside VIC 3195, P +61 3 9587 0333; F +61 3 9587 0344; E info@fabtronics.com.au, see: http://www.fabtronics.com.au/).

As shown in FIGS. 1 and 6, control unit 201 is comprised in a housing 227. The housing 227 comprises a user interface 202 in the form of a keypad 242 comprising one or more button 242a (not shown) on a keypad 242. The one or more button 242a may comprise an open button (not shown) and a close button (not shown) to open and close roller cover 140. The one or more button 242a may be disposed on a side rail. In the embodiment shown in FIG. 6 the user interface 202 further comprises LED (Light Emitting Diode) 215 which provide a back light.

A PCB 269 on which control unit 201 is disposed is also shown in FIG. 6 as is the battery connection 270. The battery connection 270 can be accessed through an orifice in housing 227. Housing 227 is also shown to comprise a lock collar 271 to prevent the control unit 201 from easily being removed. In the embodiment shown in FIG. 6, housing 227 is comprise of an upper and lower component which snap fit together.

When control unit 201 receives an open command from the housing user interface 202, the control unit 201 may check if the central locking 340 is locked or unlocked and open roller cover 140 if unlocked. The control unit 201 may not open in response to an open command from the housing user interface 202 if the central locking 340 is locked.

The control unit 201 may further comprise a proximity switch 238 operatively connected to a key fob 342 of the vehicle's central locking system 340. The proximity switch may activate the one or more button 242a of the user interface 202 so that these buttons are not operation when vehicle 300 is locked or the key fob 342 is out of range. The proximity switch 238 may be used for one or more of configuring a receiver; synching remote controls; setting roller cover speed; and other features.

Housing 227 may be positioned on a side rail 142, 144 of the roller cover 140.

As mentioned above, in one particularly advantageous embodiment, control unit 201 is operatively connected to the vehicle's central locking system 340. The connection to the central locking 340 may comprise a two-wire interface. The roller cover 140 may be opened by pressing an open or unlock button of a paired key fob 342 remote control connected to the central locking 340. The roller cover 140 may be closed by pressing a close or lock button of a paired key fob 340 remote control connected to the central locking 340.

The control unit 201 may be operatively connected to a cellular or mobile phone 400 by for example, a Bluetooth connection or a mobile telephone network connection. When the control unit 201 is operatively connected to a mobile phone 400, an interface displayed on the mobile phone 400 may be used to operate control unit 201. The interface may comprise part of an App or Application software. The Bluetooth connection may comprise a low energy Bluetooth connection.

When the control unit 201 receives an open command from the mobile phone 400, the control unit 201 may check if the central locking 340 is locked or unlocked and open if unlocked. The control unit 201 may not open in response to an open command from the mobile phone 400 if the central locking 340 is locked. When the control unit 201 receives a close command from the mobile phone 400, the roller cover 340 may close.

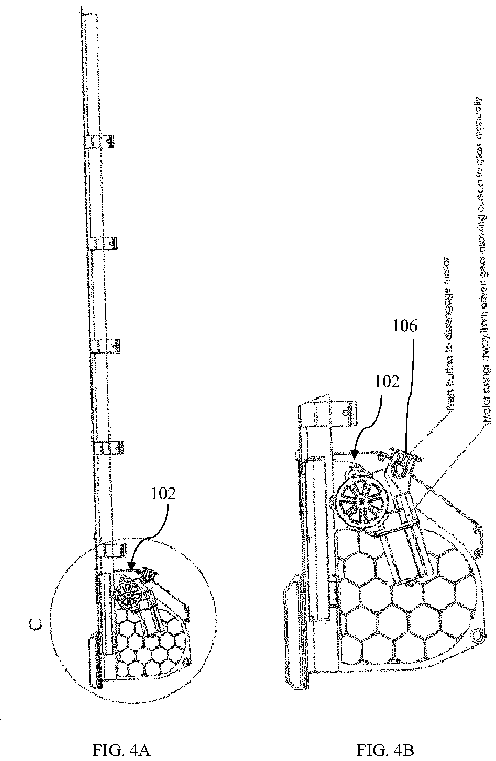

As shown in FIGS. 1, 4A and 4B roller cover 140 further comprises one or more motor 102 for driving the rolling. The motor 102 may be manually disengaged from the roller cover to allow manual opening and closing of the roller cover. As shown in FIGS. 4A and 4B, motor 102 may be disengaged by pressing on disengagement lever 106. By pressing on lever 106, the motor swings away from a driven gear 162 (not shown) on curtain 160. With the motor disengaged, the curtain may be rolled to open and close by hand.

Although not shown, automated roller cover 100 further comprises one or more light 102 for illuminating the tray back area. Like a refrigerator light, the one or more light 102 may automatically illuminate when opening and automatically shut off when closing the curtain 160. The one or more light 102 may be illuminated and or shut off by the user interface. The one or more light 102 may comprise one or more LED (Light Emitting Diode). The one or more light may comprise a light bar running along a part of or the length of the tray back 310.

The curtain 160 comprises interlocking aluminium and rubber extrusions 164 which slide along and between the two opposed side rails 142, 144. Neighbouring aluminium extrusions 164 may interlock and may sandwich a rubber extrusion. This arrangement gives maximum or good water retention and strength. Each extrusion is held in a respective curtain retainer glide 166. A plurality of curtain retainer glides 166 are disposed along a pair of slides 168, 170 which are opposed and in parallel disposed on respective side rails 142, 144. Each of the plurality of retainer glides 166 comprise a Teflon® strip for smooth and efficient rolling. The side rail slides 168, 170 fit into a canister convolute 172. Both the rails 142, 144 and the bottom of the shutter extrusions 164 are designed to have a circular radius to better glide on the Teflon® strip.

FIG. 5A shows one slide 188 partially extended, which allows visualisation of both the convolute 172 and the extended tracking along the length of tray back 310.

In FIG. 5A it is also possible to see rubber seal 174 and water channel 176 which provide maximum water seal and strength.

In another embodiment of any one of the above forms, the control unit further comprises one or more of: input over current protection; reverse-bias protection; Direct Current (DC) motor direction control; motor speed control; one or more remote control; Bluetooth connectivity; onboard system diagnostics; onboard system configuration memory; onboard black box unit usage memory; physical interface for connection to the tailgate tilt unit; and automotive grade weatherproof connections.

The one or more key fob 342 remote control may comprise a button remote control. The button remote control may comprise a Keeloq Code-Hopping 433 MHz four button remote control.

The physical interface may comprise a LIN bus. The LIN bus may also connect the control unit and the one or more tailgate tilt unit.

In yet another embodiment of any one of the above forms, one or more of the control unit 201, one or more tilt unit 180, motor 102 and light 104 are connected to a battery 302. The battery 302 may comprise the vehicle's battery.

The following non-limiting examples illustrate the invention. These examples should not be construed as limiting: the examples are included for the purposes of illustration only. The Examples will be understood to represent an exemplification of the invention.

### Example Control Unit

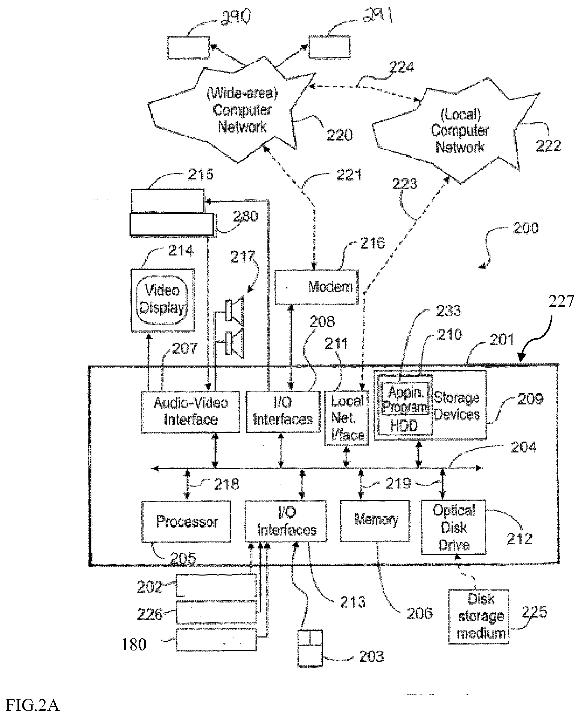

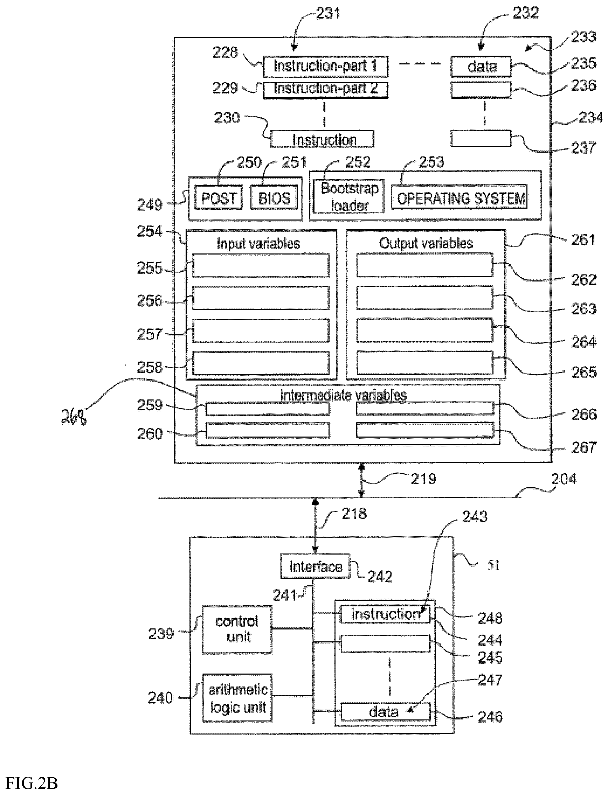

One embodiment of a control unit 201 suitable for use in the present invention is shown in Figs. 2A and 2B. Control unit 201 is connected to a computer system 200 within networks 220, 222. In the embodiment shown control unit 201 is accommodated in housing 227 and comprises input devices such as, tailgate tilt unit 180, a user interface 202, an analog stick 203, a biometric scanner 226, and an accelerometer 280; and output devices including a light emitting diodes (LEDs) 215, a display device 214 and loudspeakers 217. In some embodiments video display 214 may comprise a touchscreen. From the teaching herein, a skilled person can readily select appropriate input and output devices. For example, the interface 202, analog stick 203 and biometric scanner 226 may all be omitted and control unit 201 may be signalled with a user's car key fob 342 or mobile phone 400.

A Modulator-Demodulator (Modem) transceiver device 216 may be used by the control unit 201 for communicating to and from a communications network 220 via a connection 221. The network 220 may be a wide-area network (WAN), such as the Internet, a cellular telecommunications network, or a private WAN. Through the network 220, control unit 201 may be connected to a user's mobile phone 290 or server computers 291. Where the connection 221 is a telephone line, the modem 216 may be a traditional "dial-up" modem. Typically, a wireless modem may also be used for wireless connection to network 220 and/or radio transmission and reception may be used for connection to a user's key and the tray back vehicle's central locking.

The control unit 201 typically includes at least one processor 205, and a memory 206 for example formed from semiconductor random access memory (RAM) and semiconductor read only memory (ROM). The module 201 also includes a number of input/output (I/O) interfaces including: an audio-video interface 207 that couples to the video display 214, loudspeakers 217 and accelerometer 280; an I/O interface 213 for the keypad 242, analog stick 203, biometric scanner 226 and tailgate tilt unit 180; and an interface 208 for the external modem 216 and LEDs 215. In some implementations, modem 216 may be incorporated within the computer module 201, for example within the interface 208. The control unit 201 also has a local network interface 211 which, via a connection 223, permits coupling of the control unit 201 to a local computer network 222, known as a Local Area Network (LAN).

As also illustrated, the local network 222 may also couple to the wide area network 220 via a connection 224, which would typically include a so-called "firewall" device or device of similar functionality. The interface 211 may be formed by an Ethernet circuit card, a Bluetooth wireless arrangement or an IEEE 802.11 wireless arrangement or other suitable interface.

The I/O interfaces 208 and 213 may afford either or both of serial and parallel connectivity, the former typically being implemented according to the Universal Serial Bus (USB) standards and having corresponding USB connectors (not illustrated).

Storage devices 209 are provided and typically include a hard disk drive (HDD) 210. Other storage devices such as, a disk drive (not shown) and a magnetic tape drive (not shown) may also be used. An optical disk drive 212 is typically provided to act as a nonvolatile source of data. Portable memory devices, such as optical disks (e.g.: CD-ROM, DVD, Blu-Ray Disc), USB-RAM, external hard drives and floppy disks for example, may be used as appropriate sources of data to the control unit 201. Another source of data to control unit 201 is provided by the at least one server computer 291 through network 220.

The components 205 to 213 of the computer module 201 typically communicate via an interconnected bus 204 in a manner that results in a conventional mode of operation of control unit 201. In the embodiment shown in FIGS. 2A and 2B, processor 205 is coupled to system bus 204 through connections 218. Similarly, memory 206 and optical disk drive 212 are coupled to the system bus 204 by connections 219. Examples of control unit 201 on which the described arrangements can be practiced include.

Fig. 2B is a detailed schematic block diagram of processor 205 and a memory 234. The memory 234 represents a logical aggregation of all the memory modules, including the storage device 209 and semiconductor memory 206, which can be accessed by the computer module 201 in Fig. 2A.

The control of automated roller cover 100 and the methods of the invention may be implemented using control unit 201 wherein the control functions may be implemented as one or more software application programs 233 executable within control unit 201. In particular, the steps of the control function of the invention may be effected by instructions 231 in the software carried out within the computer module 201

The software instructions 231 may be formed as one or more code modules, each for performing one or more particular tasks. The software 233 may also be divided into two separate parts, in which a first part and the corresponding code modules performs the method of the invention and a second part and the corresponding code modules manage a graphical user interface between the first part and the user.

The software 233 may be stored in a computer readable medium, including in a storage device of a type described herein. The software is loaded into the control unit 201 from the computer readable medium or through network 221 or 223, and then executed by control unit 201. In one example the software 233 is stored on storage medium 225 that is read by optical disk drive 212. Software 233 is typically stored in the HDD 210 or the memory 206.

A computer readable medium having such software 233 or computer program recorded on it is a computer program product. The use of the computer program product in the control unit 201 preferably effects a device or apparatus for implementing the control of the roller cover of the invention.

In some instances, the software application programs 233 may be supplied to the user encoded on one or more disk storage medium 225 such as a CD-ROM, DVD or Blu-Ray disc, and read via the corresponding drive 212, or alternatively may be read by the user from the networks 220 or 222. Still further, the software can also be loaded into the control unit 201 from other computer readable media. Computer readable storage media refers to any non-transitory tangible storage medium that provides recorded instructions and/or data to the control unit 201 for execution and/or processing. Examples of such storage media include floppy disks, magnetic tape, CD-ROM, DVD, Blu-ray Disc, a hard disk drive, a ROM or integrated circuit, USB memory, a magneto-optical disk, or a computer readable card such as a PCMCIA card and the like, whether or not such devices are internal or external of the control unit 201. Examples of transitory or non-tangible computer readable transmission media that may also participate in the provision of software application programs 233, instructions 231 and/or data to the control unit 201 include radio or infra-red transmission channels as well as a network connection 221, 223, 334, to another computer or networked device 290, 291 and the Internet or an Intranet including email transmissions and information recorded on Websites and the like.

The second part of the application programs 233 and the corresponding code modules mentioned above may be executed to implement one or more graphical user interfaces (GUIs) to be rendered or otherwise represented upon display 214. Through manipulation of, typically, keyboard 202, analog stick 203 and/or screen 214 when comprising a touchscreen, a user of control unit 201 and the control functions of the present invention may manipulate the interface in a functionally adaptable manner to provide controlling commands and/or input to the applications associated with the GUI(s). Other forms of functionally adaptable user interfaces may also be implemented, such as an audio interface utilizing speech prompts output via loudspeakers 217 and user voice commands input via microphone (not shown). The manipulations including analog stick manipulations, screen touches, speech prompts and/or user voice commands may be transmitted via network 220 or 222.

When the computer module 201 is initially powered up, a power-on self-test (POST) program 250 may execute. The POST program 250 is typically stored in a ROM 249 of the semiconductor memory 206. A hardware device such as the ROM 249 is sometimes referred to as firmware. The POST program 250 examines hardware within the control unit 201 to ensure proper functioning, and typically checks processor 205, memory 234 (209, 206), and a basic input-output systems software (BIOS) module 251, also typically stored in ROM 249, for correct operation. Once the POST program 250 has run successfully, BIOS 251 activates hard disk drive 210. Activation of hard disk drive 210 causes a bootstrap loader program 252 that is resident on hard disk drive 210 to execute via processor 205. This loads an operating system 253 into RAM memory 206 upon which operating system 253 commences operation. Operating system 253 is a system level application, executable by processor 205, to fulfill various high level functions, including processor management, memory management, device management, storage management, software application interface, and generic user interface.

Operating system 253 manages memory 234 (209, 206) in order to ensure that each process or application running on computer module 201 has sufficient memory in which to execute without colliding with memory allocated to another process. Furthermore, the different types of memory available in the control unit 201 must be used properly so that each process can run effectively. Accordingly, the aggregated memory 234 is not intended to illustrate how particular segments of memory are allocated, but rather to provide a general view of the memory accessible by control unit 201 and how such is used.

Processor 205 includes a number of functional modules including a control unit 239, an arithmetic logic unit (ALU) 240, and a local or internal memory 248, sometimes called a cache memory. The cache memory 248 typically includes a number of storage registers 244, 245, 246 in a register section storing data 247. One or more internal busses 241 functionally interconnect these functional modules. The processor 205 typically also has one or more interfaces 242 for communicating with external devices via the system bus 204, using a connection 218. The memory 234 is connected to the bus 204 by connection 219.

Application program 233 includes a sequence of instructions 231 that may include conditional branch and loop instructions. Program 233 may also include data 232 which is used in execution of the program 233. The instructions 231 and the data 232 are stored in memory locations 228, 229, 230 and 235, 236, 237, respectively. Depending upon the relative size of the instructions 231 and the memory locations 228 to 230, a particular instruction may be stored in a single memory location as depicted by the instruction shown in the memory location 230. Alternately, an instruction may be segmented into a number of parts each of which is stored in a separate memory location, as depicted by the instruction segments shown in the memory locations 228 and 229.

In general, processor 205 is given a set of instructions 243 which are executed therein. The processor 205 then waits for a subsequent input, to which processor 205 reacts by executing another set of instructions. Each input may be provided from one or more of a number of sources, including data generated by one or more of the input devices 202, 203, or 214 when comprising a touchscreen, data received from an external source across one of the networks 220, 222, data retrieved from one of the storage devices 206, 209 or data retrieved from a storage medium 225 inserted into the corresponding reader 212. The execution of a set of the instructions may in some cases result in output of data. Execution may also involve storing data or variables to the memory 234.

The disclosed arrangements use input variables 254 that are stored in the memory 234 in corresponding memory locations 255, 256, 257, 258. The described arrangements produce output variables 261 that are stored in the memory 234 in corresponding memory locations 262, 263, 264, 265. Intermediate variables 268 may be stored in memory locations 259, 260, 266 and 267.

The register section 244, 245, 246, the arithmetic logic unit (ALU) 240, and the control unit 239 of the processor 205 work together to perform sequences of micro-operations needed to perform "fetch, decode, and execute" cycles for every instruction in the instruction set making up the program 233. Each fetch, decode, and execute cycle comprises:
(a) a fetch operation, which fetches or reads an instruction 231 from memory location 228, 229, 230;
(b) a decode operation in which control unit 239 determines which instruction has been fetched; and
(c) an execute operation in which the control unit 239 and/or the ALU 240 execute the instruction.

Thereafter, a further fetch, decode, and execute cycle for the next instruction may be executed. Similarly, a store cycle may be performed by which the control unit 239 stores or writes a value to a memory location 232.

Each step or sub-process in the methods of the invention may be associated with one or more segments of the program 233, and may be performed by register section 244-246, the ALU 240, and the control unit 239 in the processor 205 working together to perform the fetch, decode, and execute cycles for every instruction in the instruction set for the noted segments of program 233.

One or more other computers 290 may be connected to the communications network 220 as seen in Fig. 2A. Each such computer 290 may have a similar configuration to the computer module 201 and corresponding peripherals.

One or more other server computer 291 may be connected to the communications network 220. These server computers 291 response to requests from control unit 201 or other server computers to provide information.

In other embodiments, control unit 201 may comprise dedicated hardware such as, one or more integrated circuit. Such dedicated hardware may include graphic processors, digital signal processors, or one or more microprocessors and associated memories.

Also provided is a method 500 for automatically controlling a roller cover of a tray back vehicle. Method 500 comprises operating 502 control unit 201 operatively connected to roller cover 140 to actuate the rolling, wherein the roller cover 140 comprises a curtain 160 that rolls along at least a part of a length of said tray back 320 between a retracted position, which allows access to the tray back 320, and an extended position, which closes access to the tray back 320. According to method 500, control unit 201 is operatively connected to at least one tailgate tilt unit 180 which provides tilt data as an input to the control unit 201.

A method 510 for manufacturing an automated roller cover 100 is also provided. Method 510 comprises producing 512 a roller cover 140 comprising a curtain 160 that rolls along at least a part of a length of a tray back 320 between a retracted position which allows access to the tray back 320 and an extended position which closes access to the tray back 320. Method 510 further comprises making 514 a control unit 201 for operative connection to the roller cover 140 to actuate the rolling and providing 516 at least one tailgate tilt unit 180 operatively connected to the control unit 201 providing tilt data for the tailgate 320 as an input to the control unit 201.

Also provided is a method 520 of installing an automated roller cover 100 for a tray back vehicle 300. Method 520 comprises operatively connecting 522 a control unit 201 to actuates a roller cover 140 and operatively connecting 524 the least one tailgate tilt unit 180 to provide tilt data for the tailgate 320 as an input to the control unit 201.

Also provided is a kit 600 (not shown) for installing automated roller cover 100. Kit 600 comprises control unit 201 for operative connection to the automated roller cover 100 and the at least one tailgate tilt unit 180. The kit may or may not comprise the rollever cover 140.

Method 520 or kit 600 may comprise a method or kit of retrofitting or retro-installation.

Another significant advantage of automated roller cover 100 is that it may be ladder rack compatible.

In this specification, the terms "comprises", "comprising" or similar terms are intended to mean a non-exclusive inclusion, such that an apparatus that comprises a list of elements does not include those elements solely, but may well include other elements not listed.

Throughout the specification the aim has been to describe the invention without limiting the invention to any one embodiment or specific collection of features. Persons skilled in the relevant art may realize variations from the specific embodiments that will nonetheless fall within the scope of the invention.

## Claims

1. An automated roller cover for a tray back vehicle, the automated roller cover comprising:
a roller cover comprising a curtain that rolls along at least a part of a length of said tray back between a retracted position which allows access to the tray back and an extended position which closes access to the tray back;
a control unit operatively connected to the roller cover to actuate the rolling; and
at least one tailgate tilt unit operatively connected to the control unit providing tilt data for the tailgate as an input to the control unit.

2. A method for automatically controlling a roller cover of a tray back vehicle, the method comprising:
operating a control unit operatively connected to the roller cover to actuate the rolling, wherein the roller cover comprises a curtain that rolls along at least a part of a length of said tray back between a retracted position, which allows access to the tray back, and an extended position, which closes access to the tray back; and
wherein, the control unit is operatively connected to at least one tailgate tilt unit, the at least one tailgate tilt unit providing tilt data as an input to the control unit.

3. A method for manufacturing an automated roller cover for a tray back vehicle, the method comprising:
producing a roller cover comprising a curtain that rolls along at least a part of a length of said tray back between a retracted position which allows access to the tray back and an extended position which closes access to the tray back;
making a control unit for operative connection to the roller cover to actuate the rolling; and
providing at least one tailgate tilt unit operatively connected to the control unit providing tilt data for the tailgate as an input to the control unit.

4. A method of installing an automated roller cover for a tray back vehicle, the method comprising:
operatively connecting a control unit so the control unit actuates a roller cover, the roller cover comprising a curtain that rolls along at least a part of a length of said tray back between a retracted position which allows access to the tray back and an extended position which closes access to the tray back; and
operatively connecting at least one tailgate tilt unit to provide tilt data for the tailgate as an input to the control unit.

5. A kit for installing an automated roller cover for a tray back vehicle, the kit comprising:
a control unit for operative connection to said automated roller cover so the control unit actuates said roller cover, the roller cover comprising a curtain that rolls along at least a part of a length of said tray back between a retracted position which allows access to the tray back and an extended position which closes access to the tray back; and
at least one tailgate tilt unit for operative connection to the control unit to provide tilt data for the tailgate as an input to the control unit.

6. The kit of Claim 5 further comprising a roller cover.

7. The automated roller cover, method or kit of any one of Claims 1 to 6 wherein the at least one tail gate tilt unit comprises a sensor.

8. The automated roller cover, method or kit of any one of Claims 1 to 7 wherein the control unit compares the tray back angle to the tailgate angle to determine if the tailgate is opening, opened, closing or closed.

9. The automated roller cover, method or kit of any one of Claims 1 to 8 wherein when an open tailgate is detected, closing of the roller cover is limited to prevent damage.

10. The automated roller cover, method or kit of any one of Claims 1 to 9 wherein when the tailgate is detected to be closed, the control unit closes the roller cover.

11. The automated roller cover, method or kit of any one of Claims 1 to 10 further comprising a tray back sensor.

12. The automated roller cover, method or kit of any one of Claims 1 to 11 wherein one or both of a relative position of the at least one tail gate tilt unit relative to the body of the vehicle and a relative position of the control unit and/or tray back sensor are configured during installation.

13. The automated roller cover, method or kit of any one of Claims 1 to 12 wherein the control unit further comprises a proximity switch operatively connected to a key fob of the vehicle's central locking system.

14. The automated roller cover, method or kit of any one of Claims 1 to 13 wherein the control unit is operatively connected to the vehicle's central locking system.

15. The automated roller cover, method or kit of any one of Claims 1 to 14 wherein the control unit is operatively connected to a mobile phone.
